# EUROPEAN PATENT APPLICATION

(11) **EP 4 813 995 A1**
(43) Date of publication of application: **30.09.2026**
(21) Application number: 24894405.0
(22) Date of filing: 25.10.2024
(51) Int. Cl.: C07F 7/18, C08C 19/25, C08C 19/22

(54) **NOVEL COMPOUND AND METHOD FOR PREPARING SAME**

(30) Priority: 20.11.2023 KR 20230161543
(71) Applicant: LG CHEM, LTD., Seoul 07336 (KR)
(72) Inventor: KIM, Yong Jae, Daejeon 34122 (KR); JANG, Jae Kwon, Daejeon 34122 (KR); PARK, Do Young, Daejeon 34122 (KR); LEE, Ju Yeol, Daejeon 34122 (KR); LEE, Tae Hee, Daejeon 34122 (KR)
(74) Representative: Goddar, Heinz J.
(86) International application number: PCT/KR2024/016483
(87) International publication number: WO 2025/110511

(57) **Abstract**

The present invention provides a novel compound, which is a modifier material useful for modifying rubber, especially a polymer including a repeating unit derived from a conjugated diene-based monomer, and a method for producing the same.

## Description

### [Technical Field]

### CROSS-REFERENCE TO RELATED APPLICATION

This application claims the benefit of priority to Korean Patent Application No. 10-2023-0161543 filed on November 20, 2023, the disclosure of which is incorporated herein by reference in its entirety.

### Technical Field

The present invention relates to a novel compound capable of highly modifying rubber and a method for producing the same.

### [Background Art]

Recently, as fuel efficiency of automobiles is demanded, a conjugated diene-based polymer having low running resistance, excellent wear resistance and tensile properties, and also having steering stability represented by wet road surface resistance is required as a rubber material for tires.

In order to reduce the running resistance of tires, there is a way to reduce the hysteresis loss of vulcanized rubber, and as evaluation indices of such vulcanized rubber, rebound resilience at 50°C to 80°C, tan δ, Goodrich heat generation, etc. are used. That is, a rubber material having high rebound resilience at the above temperature or low tan δ and goodrich heat generation is preferable.

Natural rubber, polyisoprene rubber, or polybutadiene rubber are known as rubber materials with a small hysteresis loss, but they have a problem of low wet road surface resistance. Recently, conjugated diene-based polymers or copolymers such as styrene-butadiene rubber (hereinafter referred to as SBR) or butadiene rubber (hereinafter referred to as BR) have been produced by emulsion polymerization or solution polymerization and used as rubber for tires. The greatest advantage of solution polymerization over emulsion polymerization among them is that the vinyl structure content and styrene content, which define the rubber properties, can be arbitrarily adjusted, and the molecular weight and properties can be adjusted by coupling, modification, or the like. Therefore, the structure of the finally produced SBR or BR can be easily changed, and the movement of the chain end can be reduced by bonding or modification of the chain end, and the bonding strength with fillers such as silica or carbon black can be increased, so that SBR by solution polymerization is widely used as a rubber material for tires.

The solution polymerized SBR is produced using an anionic polymerization initiator, and a technology is being used to bond or modify the chain end of the formed polymer using various modifiers to introduce a functional group to the end.

### [Prior Art Literature]

### [Patent Documents]

(Patent Document 1) KR 1994-0021564 A (October 19, 1994)

### [Disclosure]

### [Technical Problem]

The present invention has been devised to solve the problems of the prior art as mentioned above, and aims to provide a novel compound useful as a rubber modifier capable of increasing an affinity between rubber and filler.

In addition, the present invention aims to provide a method for producing the above compound.

### [Technical Solution]

According to one embodiment of the present invention for solving the above-mentioned problems, the present invention provides a novel compound and a method for producing the same.
(1) The present invention provides a compound represented by Chemical Formula 1 below:

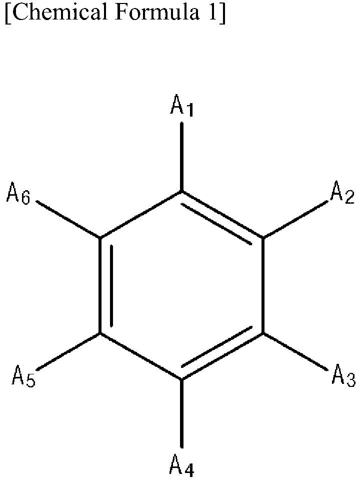

   wherein:
   A₁ to A₆ are each independently a hydrogen atom or a substituent represented by the following Chemical Formula 1a, provided that at least two of A₁ to A₆ are substituents represented by Chemical Formula 1a below: 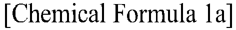 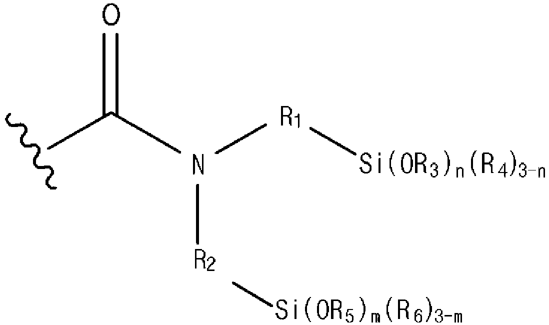
   wherein:
   R₁ and R₂ are each independently an alkylene group having 1 to 20 carbon atoms,
   R₃ to R₆ are each independently an alkyl group having 1 to 20 carbon atoms,
   n and m are each independently an integer selected from 1 to 3.
(2) The present invention provides the compound according to (1) above, wherein in Chemical Formula 1, A₁ to A₆ are each independently a hydrogen atom or a substituent represented by Chemical Formula 1a, provided that two to four of A₁ to A₆ are substituents represented by the Chemical Formula 1a.
(3) The present invention provides the compound according to (1) or (2) above, wherein in Chemical Formula 1a, R₁ and R₂ are each independently an alkylene group having 1 to 10 carbon atoms, and R₃ to R₆ are each independently an alkyl group having 1 to 10 carbon atoms.
(4) The present invention provides the compound according to any one of (1) to (3) above, wherein the compound represented by Chemical Formula 1 is any one selected from compounds represented by Chemical Formulae 1-1 to 1-3 below: 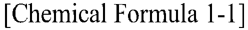 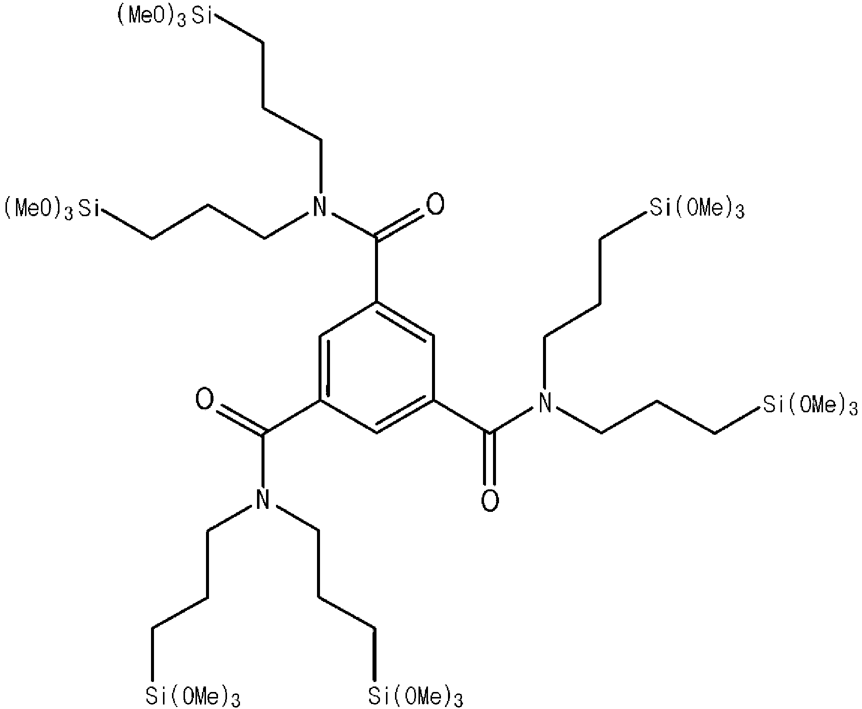 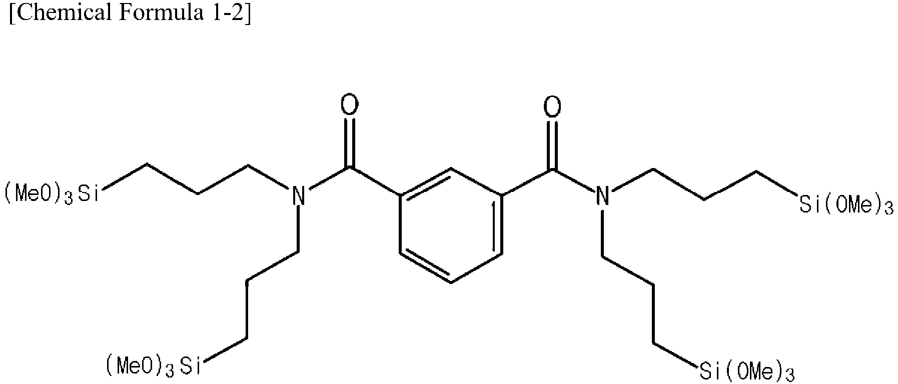 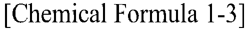 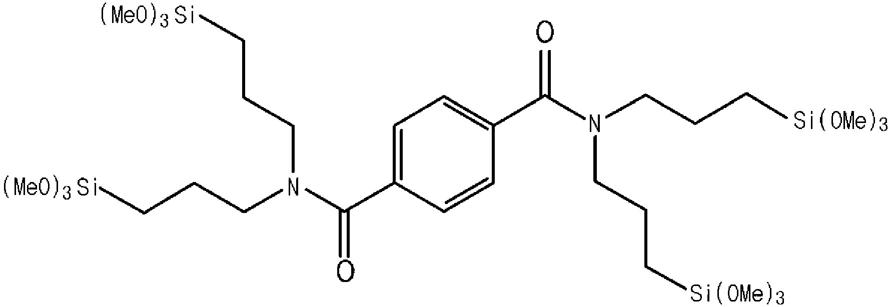 wherein Me is a methyl group.
(5) The present invention provides the compound according to any one of (1) to (4) above, wherein the compound is a modifier for modifying rubber.
(6) The present invention provides the compound according to any one of (1) to (5) above, wherein the compound is a modifier for modifying a polymer comprising a repeating unit derived from a conjugated diene-based monomer.
(7) The present invention provides a method for producing a compound represented by Chemical Formula 1 according to any one of (1) to (6) above, the method including a step of reacting a compound represented by Chemical Formula 2 below with a compound represented by Chemical Formula 3 below:

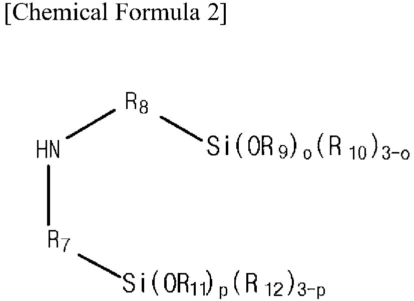

   wherein:
   R₇ and R₈ are each independently an alkylene group having 1 to 20 carbon atoms,
   R₉ to R₁₂ are each independently an alkyl group having 1 to 20 carbon atoms,
   o and p are each independently an integer selected from 1 to 3, 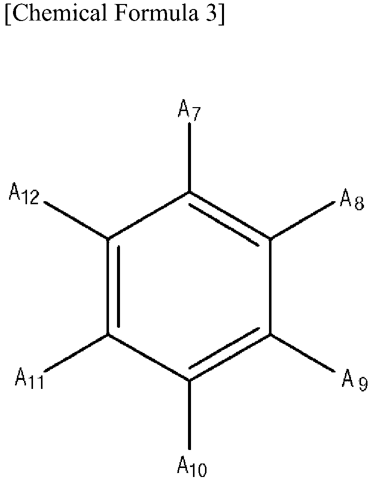
   wherein:
   A₇ to A₁₂ are each independently a hydrogen atom or -C(=O)-X, provided that at least two of A₇ to A₁₂ are -C(=O)-X, and the X is a halogen element,

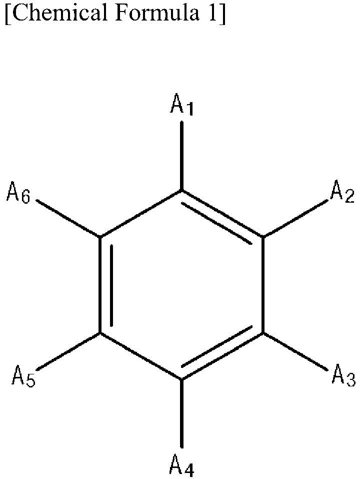

   wherein:
   A₁ to A₆ are each independently a hydrogen atom or a substituent represented by the following Chemical Formula 1a, provided that at least two of A₁ to A₆ are substituents represented by Chemical Formula 1a below: 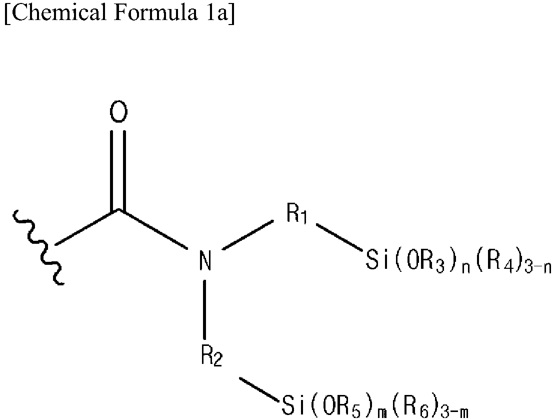 wherein:
   R₁ and R₂ are each independently an alkylene group having 1 to 20 carbon atoms,
   R₃ to R₆ are each independently an alkyl group having 1 to 20 carbon atoms,
   n and m are each independently an integer selected from 1 to 3.
(8) The present invention provides the method for producing the compound according to (7) above, wherein in Chemical Formula 2, R₇ and R₈ are each independently an alkylene group having 1 to 10 carbon atoms, and R₉ to R₁₂ are each independently an alkyl group having 1 to 10 carbon atoms.
(9) The present invention provides the method for producing the compound according to (7) or (8) above, wherein in Chemical Formula 3, A₇ to A₁₂ are each independently a hydrogen atom or -C(=O)-X, provided that two to four of A₇ to A₁₂ are -C(=O)-X, and the X is Cl.
(10) The present invention provides the method for producing the compound according any one of (7) to (9) above, wherein the reaction is performed in a reaction solvent under basic conditions.
(11) The present invention provides the method for producing the compound according any one of (7) to (10) above, wherein the compound represented by Chemical Formula 2 and the compound represented by Chemical Formula 3 are reacted in a molar ratio of 2:1 to 4:1.

### [Advantageous Effects]

The compound according to the present invention can be applied to the modification reaction of rubber, especially a polymer including a repeating unit derived from a conjugated diene-based monomer, to modify the polymer at a high modification rate, thereby exhibiting an effect of maximizing the affinity with a filler.

### [Best Modes of the Invention]

Hereinafter, the present invention will be described in more detail to help understand the present invention.

The terms or words used in the description and claims of the present invention should not be construed as being limited to their ordinary or dictionary meanings, but should be interpreted as meanings and concepts consistent with the technical spirit of the present invention, based on the principle that the inventor may adequately define the concepts of terms to best describe his invention.

### Definition of terms

The term 'polymer' used herein refers to a polymer compound produced by polymerizing monomers, regardless of whether they are of the same or different kinds. Thus, the general term 'polymer' encompasses the term 'homopolymer', which is commonly used to refer to a polymer produced from one monomer, and the term 'copolymer' as defined below.

The term 'copolymer' used herein refers to a polymer produced by polymerization of at least two different monomers. Thus, the general term 'copolymer' includes a binary copolymer, which is commonly used to refer to a polymer produced from two different monomers, and a polymer produced from more than two different monomers.

The term '1,2-vinyl bond content' used herein refers to the mass (or weight) percentage of butadiene contained in the 1,2-position in the polymer chain of the polymer based on the portion derived from a conjugated diene-based monomer (such as butadiene) in the polymer (total amount of polymerized butadiene).

The term 'styrene bond content' used herein refers to the mass (or weight) percentage of styrene contained in the polymer chain of the polymer derived from an aromatic vinyl-based monomer (such as styrene) among the polymers.

The term 'room temperature' used herein refers to a temperature as it is in a natural state without heating or cooling, and is a temperature of 20±5°C.

The term 'substitution' used herein may mean that a hydrogen of a functional group, atomic group, or compound is substituted with a specific substituent, and when a hydrogen of a functional group, atomic group, or compound is substituted with a specific substituent, one or more substituents may exist depending on the number of hydrogens present in the functional group, atomic group, or compound, wherein when a plurality of substituents exist, each of the substituents may be the same or different from each other.

The term 'alkyl group' used herein may refer to a monovalent aliphatic saturated hydrocarbon, and may include linear alkyl groups such as methyl, ethyl, propyl, and butyl; branched alkyl groups such as isopropyl, sec-butyl, tert-butyl and neopentyl; and cyclic saturated hydrocarbons, or cyclic unsaturated hydrocarbons containing one or more unsaturated bonds.

The term 'alkylene group' used herein may refer to a divalent aliphatic saturated hydrocarbon such as methylene, ethylene, propylene, and butylene.

The terms 'derived unit,' 'derived repeating unit,' and 'derived functional group' as used herein may refer to a component, structure, or substance itself derived from a substance.

The terms 'comprising,' 'having,' and their derivatives as used herein are not intended to exclude the presence of any additional component, step, or procedure, whether or not specifically disclosed. In order to avoid any uncertainty, all compositions claimed through use of the term "comprising" may include any additional additive, adjuvant, or compound, whether polymeric or otherwise, unless stated to the contrary. In contrast, the term "consisting essentially of" excludes any other component, step, or procedure from the scope of any subsequent description, except those that are not essential to operability. The term "consisting of" excludes any component, step, or procedure not specifically described or enumerated.

### Measurement methods and conditions

The 'weight average molecular weight (Mw)' and 'molecular weight distribution (MWD)' used herein were obtained by measuring the weight average molecular weight (Mw) and number average molecular weight (Mn) using gel permeation chromatograph (GPC) (PL GPC220, Agilent Technologies) under the following conditions, and obtaining the molecular weight distribution curves, and the molecular weight distribution (PDI, MWD, Mw/Mn) was obtained by calculating from each of the measured molecular weights.
Column: Two PLgel Olexis (Polymer Laboratories) columns and one PLgel mixed-C (Polymer Laboratories) column were used in combination
Solvent: 2 wt% amine compound mixed in tetrahydrofuran was used
Flow rate: 1 ml/min
Sample concentration: 1~2 mg/ml (diluted in THF)
Injection amount: 100 µL
Column temperature: 40°C
Detector: Refractive index
Standard: Polystyrene (calibrated with a third order function)

### Novel compound

The present invention provides a novel modifier compound capable of modifying rubber, especially a polymer including a repeating unit derived from a conjugated diene-based monomer, to provide a modified polymer having a high modification rate and high affinity with a filler.

The novel modifier compound according to one embodiment of the present invention is characterized by being a compound represented by Chemical Formula 1 below:

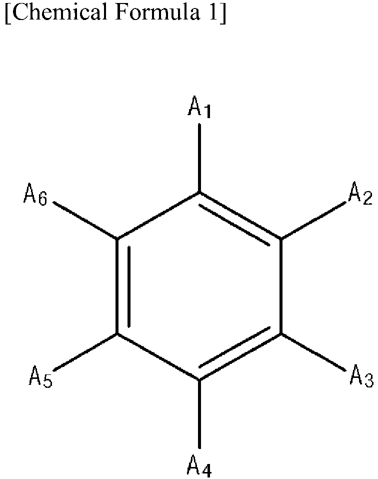

wherein:
A₁ to A₆ are each independently a hydrogen atom or a substituent represented by the following Chemical Formula 1a, provided that at least two of A₁ to A₆ are substituents represented by Chemical Formula 1a below: 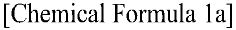 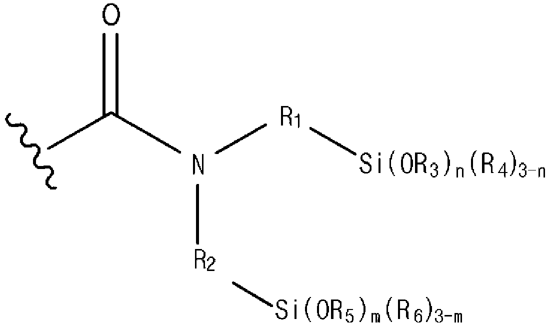 wherein:
R₁ and R₂ are each independently an alkylene group having 1 to 20 carbon atoms,
R₃ to R₆ are each independently an alkyl group having 1 to 20 carbon atoms,
n and m are each independently an integer selected from 1 to 3.

Specifically, in Chemical Formula 1, A₁ to A₆ may each independently be a hydrogen atom or a substituent represented by Chemical Formula 1a, provided that two to four of A₁ to A₆ may be substituents represented by the Chemical Formula 1a.

In addition, in Chemical Formula 1a, R₁ and R₂ may each independently be an alkylene group having 1 to 10 carbon atoms, and R₃ to R₆ may each independently be an alkyl group having 1 to 10 carbon atoms.

More specifically, in Chemical Formula 1a, R₁ and R₂ may each independently be an alkylene group having 1 to 6 carbon atoms, and R₃ to R₆ may each independently be an alkyl group having 1 to 6 carbon atoms.

Still more specifically, the compound represented by Chemical Formula 1 may be any one selected from compounds represented by Chemical Formulae 1-1 to 1-3 below: 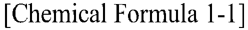 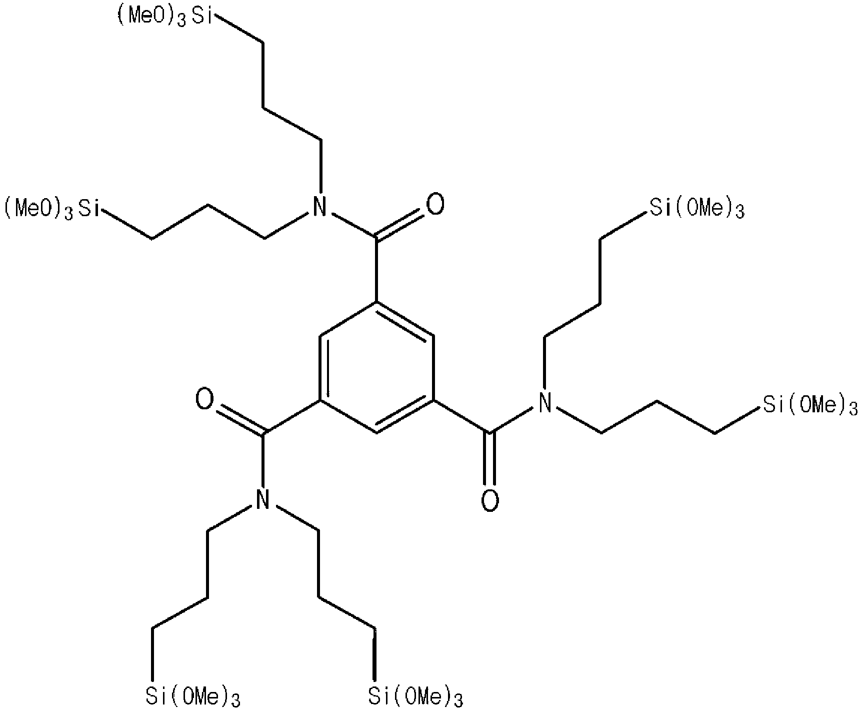 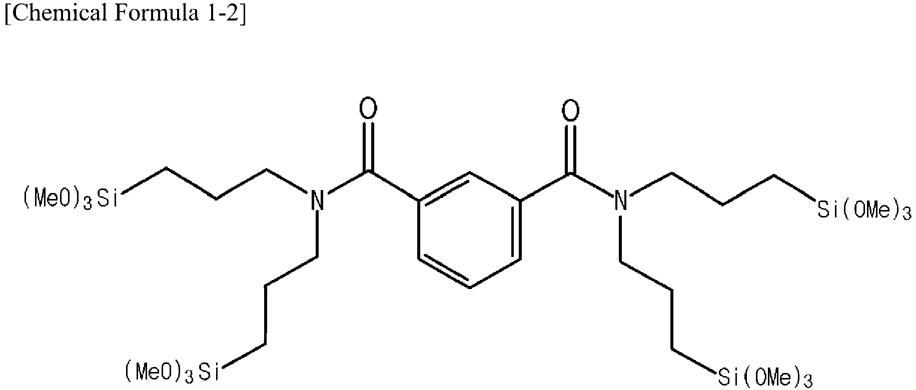 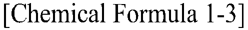 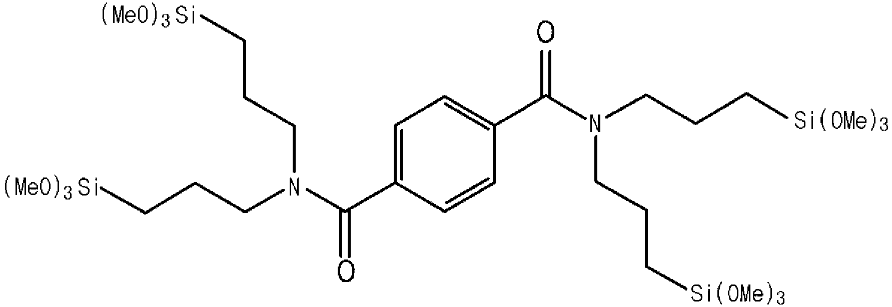 wherein Me is a methyl group.

In addition, the compound represented by Chemical Formula 1 may be a modifier for modifying rubber, and specifically, may be a modifier for modifying a polymer including a repeating unit derived from a conjugated diene-based monomer, wherein the polymer may be a homopolymer including a repeating unit derived from a conjugated diene-based monomer, and a copolymer including a repeating unit derived from the conjugated diene-based monomer and a repeating unit derived from another monomer.

Meanwhile, the compound represented by Chemical Formula 1 according to the present invention can be applied to a rubber modification reaction, i.e., as a modifier for modifying the rubber, thereby providing a plurality of coupling sites to increase the coupling rate between chains constituting the rubber, while simultaneously being introduced into the chain and modifying the chain structure to highly modify the rubber, and thus greatly increasing the affinity with a filler compared to conventional modifier materials.

In addition, the nitrogen in the compound represented by Chemical Formula 1 can play a role in increasing the affinity between the rubber modified from the compound represented by Chemical Formula 1 and the filler, and the compound represented by Chemical Formula 1 includes a plurality of coupling sites, so that the residual coupling sites (-Si-OR, alkoxy group) that have not reacted with the chain constituting the rubber after the rubber modification can form a plurality of covalent bonds with the filler, thereby forming a strong bond.

### Method for producing the compound

The present invention provides a method for producing a novel compound represented by Chemical Formula 1 above.

The method for producing the compound according to one embodiment of the present invention is characterized by including a step of reacting a compound represented by Chemical Formula 2 below and a compound represented by Chemical Formula 3 below:

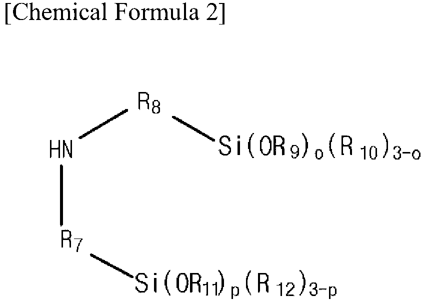

wherein:
R₇ and R₈ are each independently an alkylene group having 1 to 20 carbon atoms,
R₉ to R₁₂ are each independently an alkyl group having 1 to 20 carbon atoms,
o and p are each independently an integer selected from 1 to 3, 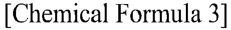 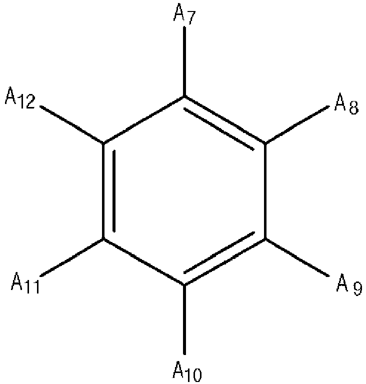
wherein:
A₇ to A₁₂ are each independently a hydrogen atom or -C(=O)-X, provided that at least two of A₇ to A₁₂ are -C(=O)-X, and the X is a halogen element,

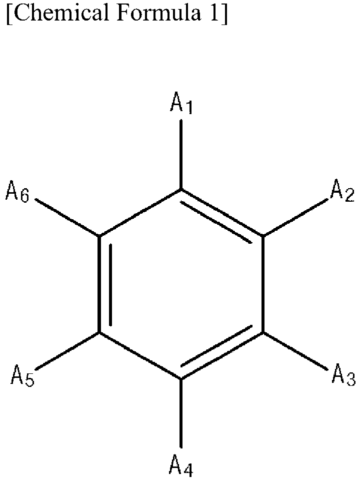

wherein:
A₁ to A₆ are each independently a hydrogen atom or a substituent represented by the following Chemical Formula 1a, provided that at least two of A₁ to A₆ are substituents represented by Chemical Formula 1a below: 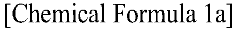 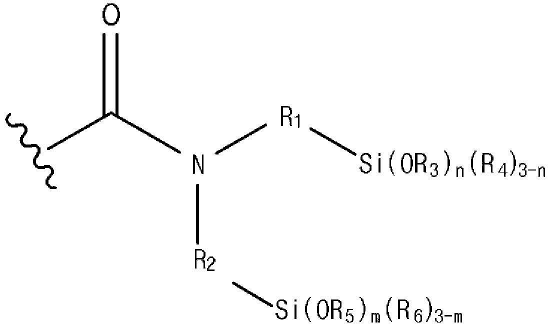 wherein:
R₁ and R₂ are each independently an alkylene group having 1 to 20 carbon atoms,
R₃ to R₆ are each independently an alkyl group having 1 to 20 carbon atoms,
n and m are each independently an integer selected from 1 to 3.

In Chemical Formula 3 above, the halogen element may be Cl, Br, I or F.

Specifically, in Chemical Formula 2 above, R₇ and R₈ may each independently be an alkylene group having 1 to 10 carbon atoms, and R₉ to R₁₂ may each independently be an alkyl group having 1 to 10 carbon atoms.

In addition, in Chemical Formula 3 above, A₇ to A₁₂ may each independently be a hydrogen atom or -C(=O)-X, provided that two to four of A₇ to A₁₂ may be -C(=O)-X, and the X may be Cl.

The reaction may be performed in a reaction solvent under basic conditions. In addition, the reaction may be carried out at room temperature (20±5°C).

The above basic condition may be formed by adding a base compound, wherein the base compound is not particularly limited as long as it is commonly used in the art, but may be, for example, triethylamine.

In addition, the compound represented by Chemical Formula 2 above and the compound represented by Chemical Formula 3 above may be reacted at an appropriate ratio according to the stoichiometric ratio, but specifically, may be reacted at a molar ratio of 2:1 to 4:1.

### Modified conjugated diene-based polymer

The present invention provides a modified conjugated diene-based polymer modified with a compound represented by Chemical Formula 1 above.

The modified conjugated diene-based polymer according to one embodiment of the present invention is characterized in that it includes a conjugated diene-based monomer unit and a modifier residue, wherein the modifier residue includes a compound represented by Chemical Formula 1 above.

In another example, the modified conjugated diene-based polymer according to one embodiment of the present invention is characterized by including a repeating unit derived from a conjugated diene-based monomer and a unit derived from a compound represented by Chemical Formula 1 above.

Here, since the compound represented by Chemical Formula 1 above is as described above, a detailed description thereof is omitted.

The modified conjugated diene-based polymer has a repeating unit derived from a conjugated diene-based monomer as the main unit thereof, wherein the conjugated diene-based monomer may be, for example, at least one selected from the group consisting of 1,3-butadiene, 2,3-dimethyl-1,3-butadiene, piperylene, 3-butyl-1,3-octadiene, isoprene, 2-phenyl-1,3-butadiene, and 2-halo-1,3-butadiene (wherein halo means a halogen element).

In addition, the modified conjugated diene-based polymer may further include a repeating unit derived from an aromatic vinyl-based monomer in addition to the conjugated diene-based monomer, wherein the aromatic vinyl-based monomer may be, for example, at least one selected from the group consisting of styrene, α-methylstyrene, 3-methylstyrene, 4-methylstyrene, 4-propylstyrene, 1-vinylnaphthalene, 4-cyclohexylstyrene, 4-(p-methylphenyl)styrene, 1-vinyl-5-hexylnaphthalene, 3-(2-pyrrolidino ethyl)styrene, 4-(2-pyrrolidino ethyl)styrene, and 3-(2-pyrrolidino-1-methylethyl)-α-methylstyrene.

As another example, the modified conjugated diene-based polymer may be a copolymer further comprising a repeating unit derived from a diene-based monomer having 1 to 10 carbon atoms together with the repeating unit derived from the conjugated diene-based monomer. The repeating unit derived from the diene-based monomer may be a repeating unit derived from a diene-based monomer different from the conjugated diene-based monomer, wherein the diene-based monomer different from the conjugated diene-based monomer may be, for example, 1,2-butadiene. When the conjugated diene-based polymer is a copolymer further comprising a diene-based monomer, the conjugated diene-based polymer may include a repeating unit derived from the diene-based monomer in an amount of more than 0 wt% to 1 wt%, more than 0 wt% to 0.1 wt%, more than 0 wt% to 0.01 wt%, or more than 0 wt% to 0.001 wt%. Within this range, there is an effect of preventing gel formation.

According to one embodiment of the present invention, when the chain of the conjugated diene-based polymer includes two or more monomers, it may have a chain structure in an intermediate form between a random copolymer and a block copolymer, and in this case, the microstructure can be easily controlled, and thus, there is an effect of excellent balance between the properties. The random copolymer may mean that the repeating units forming the copolymer are arranged randomly.

In addition, the modified conjugated diene-based polymer includes a functional group derived from a modifier, wherein the modifier is intended to modify the end of the polymer, and means a unit derived from the compound represented by Chemical Formula 1 above.

According to one embodiment of the present invention, the modified conjugated diene-based polymer may have a weight average molecular weight (Mw) of 300,000 g/mol to 3,000,000 g/mol, 400,000 g/mol to 2,500,000 g/mol, or 500,000 g/mol to 2,000,000 g/mol as measured by gel permeation chromatography (GPC). Within this range, there is an effect of more balanced and excellent running resistance and wet road surface resistance.

In addition, the modified conjugated diene-based polymer according to one embodiment of the present invention may be a high molecular weight polymer having a weight average molecular weight of 800,000 g/mol or more, preferably 1,000,000 g/mol or more, and thus can implement a polymer having excellent tensile properties, which can be achieved by implementing the effect of extending the polymer chain together with the control of the microstructure when produced according to the above-described producing method.

According to one embodiment of the present invention, the modified conjugated diene-based polymer may have a number average molecular weight (Mn) of 1,000 g/mol to 2,000,000 g/mol, 10,000 g/mol to 1,500,000 g/mol, or 100,000 g/mol to 1,200,000 g/mol, preferably 400,000 g/mol or more, more preferably 500,000 g/mol or more. In addition, the peak top molecular weight (Mp) may be 1,000 g/mol to 3,000,000 g/mol, 10,000 g/mol to 2,000,000 g/mol, or 100,000 g/mol to 2,000,000 g/mol. Within this range, there is an effect of excellent running resistance and wet road surface resistance.

In addition, the modified conjugated diene-based polymer may have a molecular weight distribution of 1.0 to 3.0, preferably 1.0 to 2.5, more preferably 1.0 to 2.0.

In addition, the modified conjugated diene-based polymer according to one embodiment of the present invention should satisfy that the Mooney viscosity measured under ASTM D1646 conditions is 40 to 120, and may be preferably 45 to 100. There may be various measures for evaluating processability, but when the Mooney viscosity satisfies the above range, the processability may be considerably excellent.

In addition, the modified conjugated diene-based polymer may be produced by a conventional method except for modifying it with the compound represented by Chemical Formula 1. For example, it may be produced by polymerizing a conjugated diene-based monomer or a conjugated diene-based monomer and an aromatic vinyl-based monomer in the presence of a hydrocarbon solvent and a polymerization initiator to prepare an active polymer, and reacting the active polymer with the compound represented by Chemical Formula 1 above.

The hydrocarbon solvent is not particularly limited, but may be at least one selected from the group consisting of n-pentane, n-hexane, n-heptane, isooctane, cyclohexane, toluene, benzene, and xylene.

The polymerization initiator may be used in an amount of 0.1 to 3.0 equivalents, preferably 0.1 to 2.0 equivalents, more preferably 0.5 to 1.5 equivalents, based on 1.0 equivalent of the monomer. In another example, the polymerization initiator may be used in an amount of 0.01 mmol to 10 mmol, 0.05 mmol to 5 mmol, 0.1 mmol to 2 mmol, 0.1 mmol to 1 mmol, or 0.15 to 0.8 mmol, based on 100 g of the total monomer. Here, the total 100 g of the monomer may be a conjugated diene-based monomer, or may represent the sum of the conjugated diene-based monomer and the aromatic vinyl-based monomer.

Meanwhile, the polymerization initiator may be an organometallic compound, and for example, may be at least one selected from an organolithium compound, an organosodium compound, an organopotassium compound, an organorubidium compound, and an organocesium compound.

Specifically, the organometallic compound may be at least one selected from the group consisting of methyllithium, ethyllithium, propyllithium, n-butyllithium, s-butyllithium, t-butyllithium, hexyllithium, n-decyllithium, t-octyllithium, phenyllithium, 1-naphthyllithium, n-eicosyllithium, 4-butylphenyllithium, 4-tolyllithium, cyclohexyllithium, 3,5-di-n-heptylcyclohexyllithium, 4-cyclopentyllithium, naphthylsodium, naphthylpotassium, lithium alkoxide, sodium alkoxide, potassium alkoxide, lithium sulfonate, sodium sulfonate, potassium sulfonate, lithium amide, sodium amide, potassium amide, and lithium isopropylamide.

In addition, the polymerization may be performed by further using a polar additive, and in the case of homopolymerizing a conjugated diene-based monomer, the ratio of 1,2-bonds and 1,4-bonds can be controlled by controlling the reaction rate. In the case of copolymerizing a conjugated diene-based monomer and an aromatic vinyl-based monomer, a difference in reaction rate between the monomers may be corrected to induce a random copolymer to be easily formed.

The total amount of the polar additive used may be in a ratio of 0.001 g to 50 g, or 0.002 g to 1.0 g, relative to a total of 100 g of the monomers. As another example, the total amount of the polar additive used may be in a ratio of more than 0 g to 1 g, 0.01 g to 1 g, or 0.1 g to 0.9 g, relative to a total of 100 g of the polymerization initiators.

The polar additive may be, for example, at least one selected from the group consisting of tetrahydrofuran, 2,2-di(2-tetrahydrofuryl)propane, diethyl ether, cyclopentyl ether, dipropyl ether, ethylene methyl ether, ethylene glycol dimethyl ether, diethylene glycol, dimethyl ether, tert-butoxyethoxyethane, bis(3-dimethylaminoethyl)ether, (dimethylaminoethyl)ethyl ether, trimethylamine, triethylamine, tripropylamine, N,N,N',N'-tetramethylethylenediamine, sodium mentholate, and 2-ethyl tetrahydrofurfuryl ether, and preferably, 2,2-di(2-tetrahydrofuryl)propane, triethylamine, tetramethylethylenediamine, sodium mentholate, or 2-ethyl tetrahydrofurfuryl ether.

In addition, the active polymer may refer to a polymer in which a polymer anion and an organic metal cation of a polymerization initiator are combined.

In the modification step in which the active polymer and the compound represented by Chemical Formula 1 are reacted, an anion active site of the active polymer and an alkoxy group bonded to a silane of the compound represented by Chemical Formula 1 may react. The compound represented by Chemical Formula 1 may be used in an amount of 0.01 mmol to 10 mmol based on a total of 100 g of the monomers. As another example, the compound represented by Chemical Formula 1 may be used in a molar ratio of 1:0.1 to 10, 1:0.1 to 5, or 1:0.1 to 3 based on 1 mol of the polymerization initiator.

In this case, the reaction may be a modification reaction in which the compound represented by Chemical Formula 1 is simply combined with the active polymer, or a coupling reaction in which the active polymer is connected based on the compound represented by Chemical Formula 1.

### EXAMPLES

Hereinafter, the present invention will be described in detail by way of examples. However, the examples according to the present invention may be modified in various different forms, and the scope of the present invention should not be construed as being limited to the examples described in detail below. The examples of the present invention are provided to explain the present invention more completely to those skilled in the art.

### Example 1

8 g (39.4 mmol) of terephthaloyl dichloride, 28.3 g of bis(3-(trimethoxysilyl)propyl)amine, and 16.5 ml of triethylamine were added to 120 ml of dichloromethane, and stirred at room temperature for 18 hours to react. After the reaction was completed, the solvent was removed by distillation under reduced pressure, and 50 ml of hexane was added and stirred for 15 minutes. Then, the solid by-products were removed by a celite filter, and the solution and impurities were removed by distillation under reduced pressure to prepare a compound represented by Chemical Formula 1-3 as a light yellow oil. The synthesis of the prepared compound was confirmed through ¹H NMR analysis. 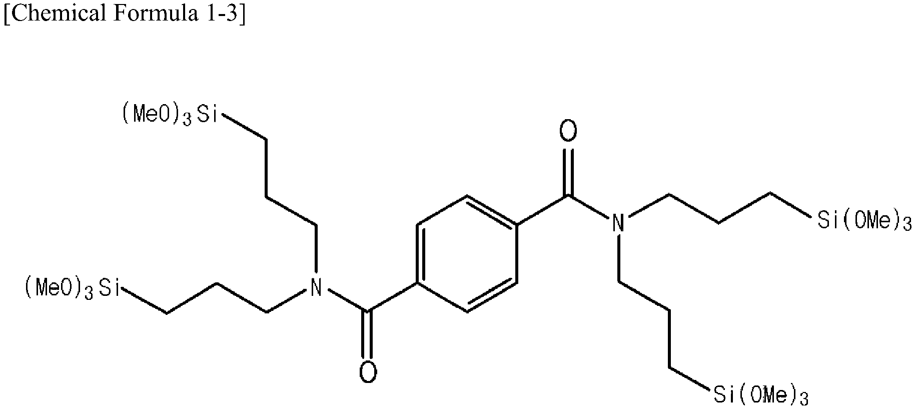 wherein Me is a methyl group.

¹H NMR (500 MHz, CDCl₃) δ 7.38 (s, 4H), 3.52 (dd, J=39.5, 23.9 Hz, 36H), 3.46 - 3.06 (m, 8H), 1.68 (d, J=89.9 Hz, 8H), 0.75 - 0.31 (m, 8H).

### Example 2

8 g (39.4 mmol) of isophthaloyl dichloride, 28.3 g of bis(3-(trimethoxysilyl)propyl)amine, and 16.5 ml of triethylamine were added to 120 ml of dichloromethane, and stirred at room temperature for 18 hours to react. After the reaction was completed, the solvent was removed by distillation under reduced pressure, and 50 ml of hexane was added and stirred for 15 minutes. Then, the solid by-products were removed by a celite filter, and the solution and impurities were removed by distillation under reduced pressure to prepare a compound represented by Chemical Formula 1-2 as a light yellow oil. The synthesis of the prepared compound was confirmed through ¹H NMR analysis. 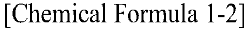 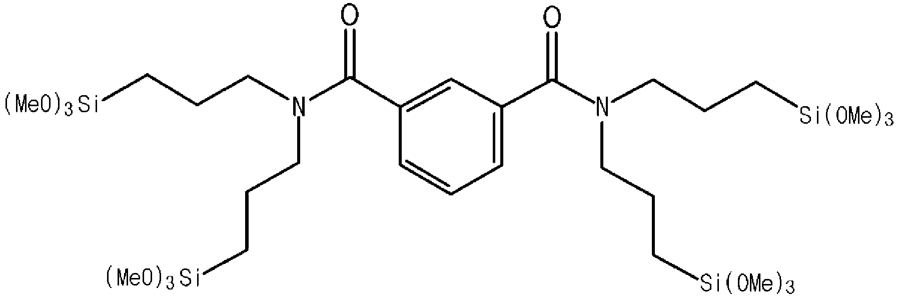 wherein Me is a methyl group.

¹H NMR (500 MHz, CDCl₃) δ 7.08 - 6.81 (m, 3H), 3.16 (d, J=40.3 Hz, 27 H), 2.89 (d, J=85.7 Hz, 5H), 1.29 (d, J=85.5 Hz, 6H), 0.15 (d, J=147.0 Hz, 6H).

### Example 3

8 g (30.1 mmol) of benzene-1,3,5-tricarbonyl trichloride, 30.88 g of bis(3-(trimethoxysilyl)propyl)amine, and 25.2 ml of triethylamine were added to 90 ml of dichloromethane, and stirred at room temperature for 18 hours to react. After the reaction was completed, the solvent was removed by distillation under reduced pressure, and 50 ml of hexane was added and stirred for 15 minutes. Then, the solid by-products were removed by a celite filter, and the solution and impurities were removed by distillation under reduced pressure to prepare a compound represented by Chemical Formula 1-1 as a light yellow oil. The synthesis of the prepared compound was confirmed through ¹H NMR analysis. 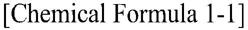 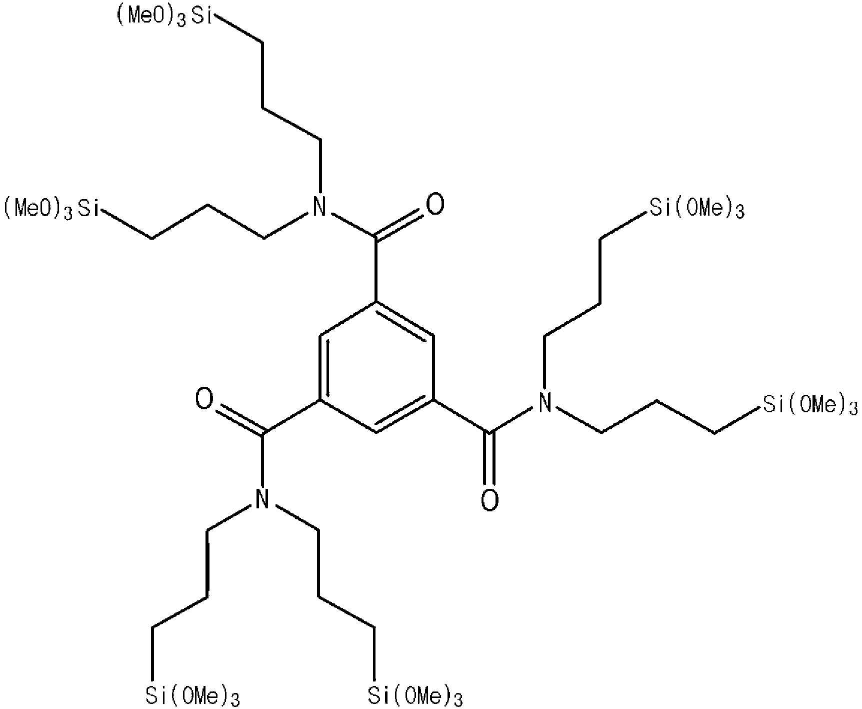 wherein Me is a methyl group.

¹H NMR (500 MHz, CDCl₃) δ 7.10 (dd, J=35.0, 7.3 Hz, 3H), 3.46 (d, J=33.8 Hz, 54H), 3.39 - 3.00 (m, 12H), 1.58 (d, J=77.4 Hz, 12H), 0.69 - 0.17 (m, 12H).

### Example 4

64.5 g of styrene, 235.5 g of 1,3-butadiene, 2,000 g of n-hexane, and 0.42 g of DTP (2,2-di(2-(tetrahydrofuryl)propane)) as a polar additive were added to a 10 L autoclave reactor, and the internal temperature of the reactor was adjusted to 60°C. When it reached 60°C, 0.26 g of n-butyllithium was injected into the reactor to react. After 40 minutes, 0.29 g of the compound represented by Chemical Formula 1-3 prepared in Example 1 was added and reacted for 40 minutes. Thereafter, the reaction was stopped, an antioxidant was added to obtain a polymer, which was dried to prepare a modified styrene-butadiene copolymer.

### Example 5

A modified styrene-butadiene copolymer was prepared in the same manner as in Example 4, except that the compound represented by Chemical Formula 1-2 prepared in Example 2 was used instead of the compound represented by Chemical Formula 1-3 in Example 4.

### Example 6

A modified styrene-butadiene copolymer was prepared in the same manner as in Example 4, except that the compound represented by Chemical Formula 1-1 prepared in Example 3 was used instead of the compound represented by Chemical Formula 1-3 in Example 4.

### Comparative Example

A modified styrene-butadiene copolymer was prepared in the same manner as in Example 4, except that 0.08 g of 3-(trimethoxysilyl)propylamine was used instead of the compound represented by Chemical Formula 1-3 in Example 4.

### Experimental Example 1. Evaluation of Polymer Characteristics

For each of the modified styrene-butadiene copolymers prepared in Examples 4 to 6, the weight average molecular weight (Mw, ×10³ g/mol), maximum peak molecular weight (Mp, ×10³ g/mol), and coupling number were measured, respectively. The results were shown in Table 1 below.

### 1) Weight average molecular weight (Mw, ×10³ g/mol), maximum peak molecular weight (Mp, ×10³ g/mol)

The weight average molecular weight (Mw) and maximum peak molecular weight (Mp) were measured using gel permeation chromatography (GPC) (PL GPC220, Agilent Technologies) under the following conditions, respectively. Meanwhile, in the case of Examples 4 to 6, a portion of the active polymer was collected, and the maximum peak molecular weight before modification was also measured.
Column: Two PLgel Olexis (Polymer Laboratories) columns and one PLgel mixed-C (Polymer Laboratories) column were used in combination
Solvent: 2 wt% amine compound mixed in tetrahydrofuran was used
Flow rate: 1 mL/min
Sample concentration: 1~2 mg/mL (diluted in THF)
Injection amount: 100 µL
Column temperature: 40°C
Detector: Refractive index
Standard: Polystyrene (calibrated with a third order function)

### 2) Coupling number (C.N.)

The coupling number was calculated by the following Mathematical Equation 1 from the maximum peak molecular weight before modification measured in 1) above and the maximum peak molecular weight of the finally modified polymer.$Coupling number = {Mp}_{2} / {Mp}_{1}$
wherein Mp₁ is the maximum peak molecular weight of the active polymer before modification, and Mp₂ is the maximum peak molecular weight of the finally modified polymer.

**[Table 1]**

| Division | | Example | | | Comparative example |
|---|---|---|---|---|---|
| | | 4 | 5 | 6 | |
| GPC | Mw(X10³ g/mol) | 1179 | 961 | 1280 | 498 |
| | Mp₁(X10³ g/mol) | 320 | 299 | 370 | 208 |
| | Mp₂(X10³ g/mol) | 1402 | 1320 | 1537 | 478 |
| | Coupling number | 4.38 | 4.41 | 4.15 | 2.30 |

As shown in Table 1 above, it was confirmed that Examples 4 to 6 had a significant increase in weight average molecular weight and a significant increase in coupling number compared to the comparative example.Through this, it was confirmed that the compound represented by Chemical Formula 1 according to the present invention was applied as a modifier for modifying a polymer, thereby providing a plurality of coupling sites to increase the coupling rate between chains constituting the polymer, while simultaneously being introduced into the chain and modifying the chain structure to highly modify the polymer.

## Claims

1. A compound represented by Chemical Formula 1 below: 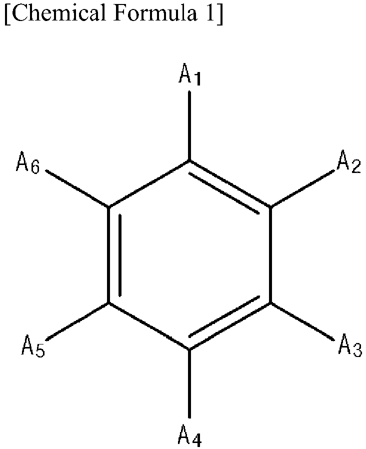 wherein:
A₁ to A₆ are each independently a hydrogen atom or a substituent represented by the following Chemical Formula 1a, provided that at least two of A₁ to A₆ are substituents represented by Chemical Formula 1a below: 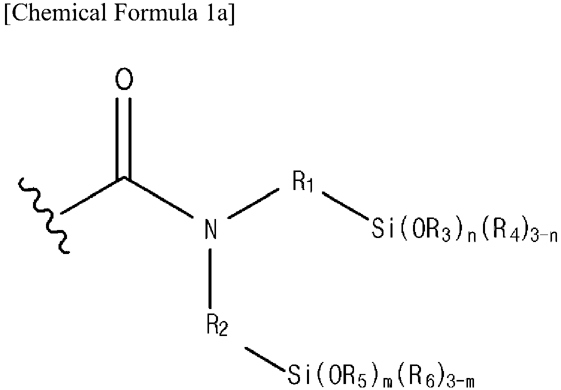 wherein:
R₁ and R₂ are each independently an alkylene group having 1 to 20 carbon atoms,
R₃ to R₆ are each independently an alkyl group having 1 to 20 carbon atoms,
n and m are each independently an integer selected from 1 to 3.

2. The compound according to claim 1, wherein in Chemical Formula 1 above, A₁ to A₆ are each independently a hydrogen atom or a substituent represented by Chemical Formula 1a, provided that two to four of A₁ to A₆ are substituents represented by Chemical Formula 1a.

3. The compound according to claim 1, wherein in Chemical Formula 1a above, R₁ and R₂ are each independently an alkylene group having 1 to 10 carbon atoms, and R₃ to R₆ are each independently an alkyl group having 1 to 10 carbon atoms.

4. The compound according to claim 1, wherein the compound represented by Chemical Formula 1 above is any one selected from compounds represented by Chemical Formulae 1-1 to 1-3 below: 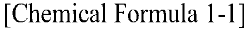 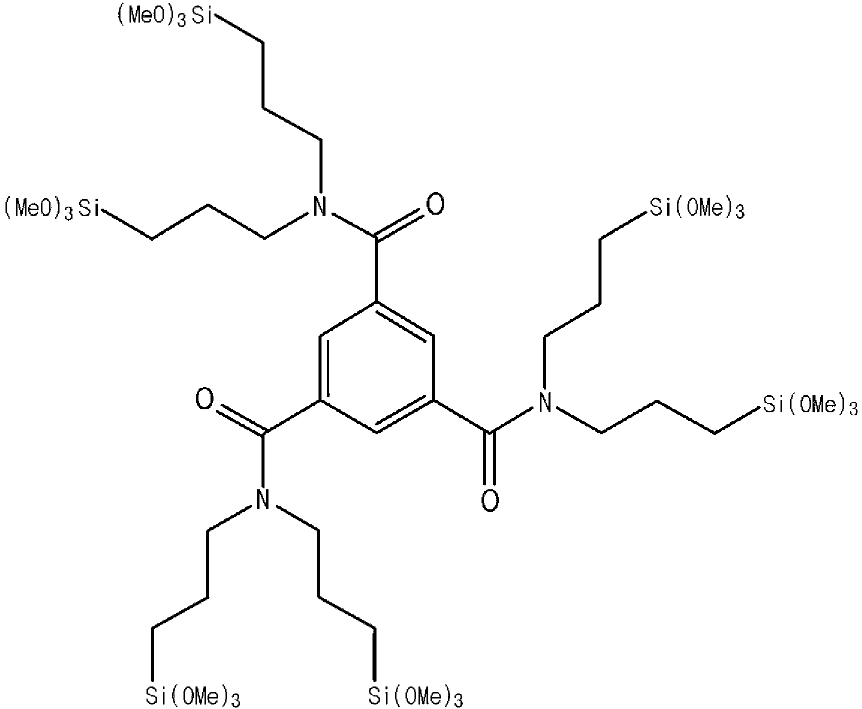 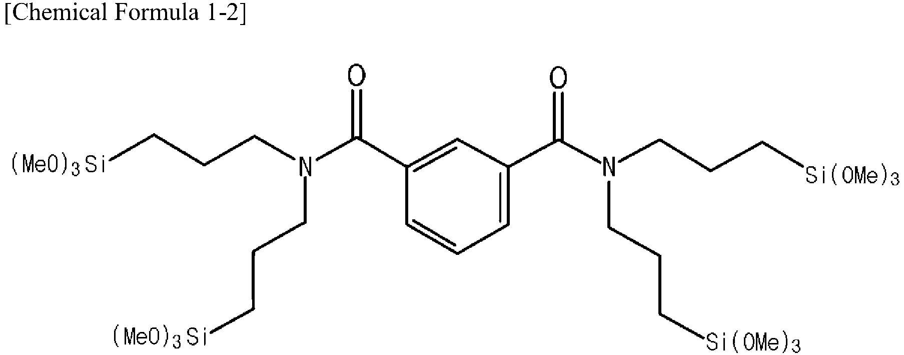 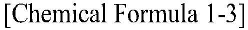 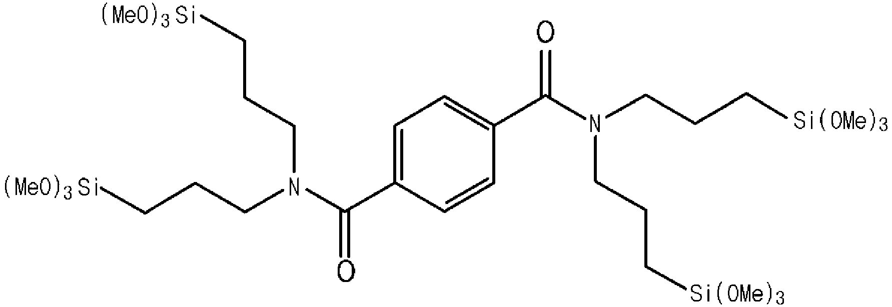 wherein Me is a methyl group.

5. The compound according to claim 1, wherein the compound is a modifier for modifying rubber.

6. The compound according to claim 1, wherein the compound is a modifier for modifying a polymer comprising a repeating unit derived from a conjugated diene-based monomer.

7. A method for producing a compound represented by Chemical Formula 1, the method including a step of reacting a compound represented by Chemical Formula 2 below with a compound represented by Chemical Formula 3 below: 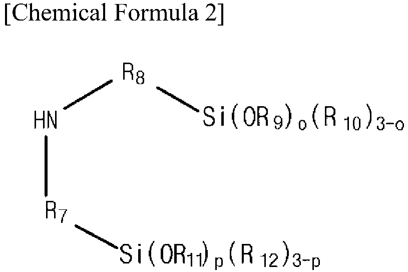 wherein:
R₇ and R₈ are each independently an alkylene group having 1 to 20 carbon atoms,
R₉ to R₁₂ are each independently an alkyl group having 1 to 20 carbon atoms,
o and p are each independently an integer selected from 1 to 3, 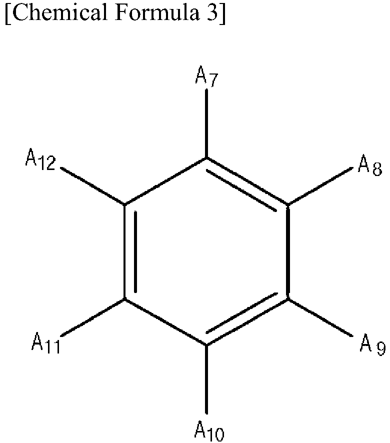
wherein:
A₇ to A₁₂ are each independently a hydrogen atom or -C(=O)-X, provided that at least two of A₇ to A₁₂ are -C(=O)-X, and the X is a halogen element, 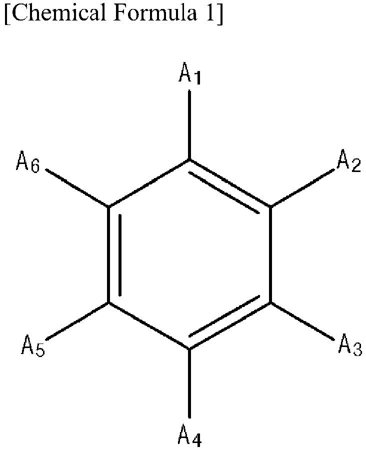 wherein:
A₁ to A₆ are each independently a hydrogen atom or a substituent represented by the following Chemical Formula 1a, provided that at least two of A₁ to A₆ are substituents represented by Chemical Formula 1a below: 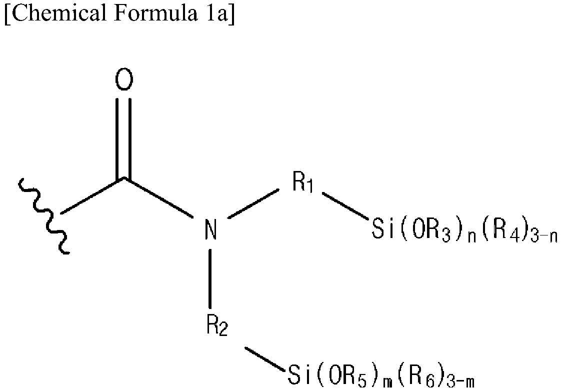 wherein:
R₁ and R₂ are each independently an alkylene group having 1 to 20 carbon atoms,
R₃ to R₆ are each independently an alkyl group having 1 to 20 carbon atoms,
n and m are each independently an integer selected from 1 to 3.

8. The method for producing the compound according to claim 7, wherein in Chemical Formula 2 above, R₇ and R₈ are each independently an alkylene group having 1 to 10 carbon atoms, and R₉ to R₁₂ are each independently an alkyl group having 1 to 10 carbon atoms.

9. The method for producing the compound according to claim 7, wherein in Chemical Formula 3 above, A₇ to A₁₂ are each independently a hydrogen atom or -C(=O)-X, provided that two to four of A₇ to A₁₂ are -C(=O)-X, and the X is Cl.

10. The method for producing the compound according to claim 7, wherein the reaction is performed in a reaction solvent under basic conditions.

11. The method for producing the compound according to claim 7, wherein the compound represented by Chemical Formula 2 above and the compound represented by Chemical Formula 3 above are reacted in a molar ratio of 2:1 to 4:1.
